(19) Europäisches Patentamt / European Patent Office / Office européen des brevets

(11) **EP 4 283 328 A1**

(12) **EUROPEAN PATENT APPLICATION**
published in accordance with Art. 153(4) EPC

(43) Date of publication:
**29.11.2023 Bulletin 2023/48**

(21) Application number: **21920557.2**

(22) Date of filing: **27.07.2021**

(51) International Patent Classification (IPC):
*G01S 7/40* (2006.01)    *G01S 7/497* (2006.01)
*G01M 11/02* (2006.01)    *G06T 7/80* (2017.01)
*G06F 17/16* (2006.01)

(52) Cooperative Patent Classification (CPC):
Y02A 90/10

(86) International application number:
**PCT/CN2021/108586**

(87) International publication number:
**WO 2022/156176 (28.07.2022 Gazette 2022/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.01.2021 CN 202110089938**

(71) Applicant: **Shanghai Westwell Technology Co., Ltd.**
**Shanghai 200050 (CN)**

(72) Inventors:
- **ZHANG, Rong**
  **Shanghai 200050 (CN)**
- **ZHANG, Dapeng**
  **Shanghai 200050 (CN)**
- **ZHAO, Zhao**
  **Shanghai 200050 (CN)**

(74) Representative: **Cabinet Laurent & Charras**
**Le Contemporain**
**50 Chemin de la Bruyère**
**69574 Dardilly Cedex (FR)**

(54) **MULTI-RADAR AND CAMERA JOINT CALIBRATION METHOD, SYSTEM AND DEVICE, AND STORAGE MEDIUM**

(57) Provided are a multi-radar and camera joint calibration method, system and device, and a storage medium. The calibration method comprises the following steps : providing multiple radar sensors and an image sensor to form a common field-of-view area together (S 100); successively arranging a calibration plate at a plurality of target positions in the common field-of-view area, wherein a plurality of calibration patterns are provided on the calibration plate, and for the calibration patterns, materials having different reflection coefficients are arranged around the centers of the calibration patterns, and obtaining data of detection of the calibration plate at different target positions by the radar sensors and the image sensor, so as to obtain coordinate information of the centers of the calibration patterns in respective three-dimensional coordinate systems of each radar sensor and the image sensor (S200); and performing joint calibration according to the coordinate information (S300). According to the present method, the world coordinates of reference points on the same calibration plate can be simultaneously obtained by means of three different sensors, and j oint calibration is then realized by means of iterative matching, thereby reducing the steps of multi-sensor calibration, and increasing the speed of joint calibration.

S100 — PROVIDE MULTIPLE RADAR SENSORS AND AN IMAGE SENSOR, SO AS TO FORM A COMMON FIELD-OF-VIEW AREA TOGETHER

S200 — SUCCESSIVELY ARRANGE A CALIBRATION PLATE AT A PLURALITY OF TARGET POSITIONS IN THE COMMON FIELD-OF-VIEW AREA, WHEREIN A PLURALITY OF CALIBRATION PATTERNS ARE PROVIDED ON THE CALIBRATION PLATE, AND FOR THE CALIBRATION PATTERNS, MATERIALS HAVING DIFFERENT REFLECTION COEFFICIENTS ARE ARRANGED AROUND THE CENTERS OF THE CALIBRATION PATTERNS, AND OBTAIN DATA OF DETECTION OF THE CALIBRATION PLATE AT DIFFERENT TARGET POSITIONS BY THE RADAR SENSORS AND THE IMAGE SENSOR, SO AS TO OBTAIN COORDINATE INFORMATION OF THE CENTERS OF THE CALIBRATION PATTERNS IN RESPEGTIVE THREE-DIMENSIONAL COORDINATE SYSTEMS OF EACH RADAR SENSOR AND THE IMAGE SENSOR

S300 — PERFORM JOINT CALIBRATION ACCORDING TO THE COORDINATE INFORMATION

FIG. 1

EP 4 283 328 A1

## Description

## TECHNICAL FIELD

The present disclosure relates to the field of multiple sensors calibration technology, in particular to a method, a system, a device and a storage medium for jointly calibrating multiple radars and camera.

## BACKGROUND

At present, fusion technologies for multiple sensors, including millimeter wave radars, laser radars and cameras are widely used in autonomous driving, V2X road sensing, and other industrial fields. Fusing multiple sensors needs to synchronize space and time, and a first step of fusion is to synchronize space, that is, joint calibration. Traditional joint calibration methods are scattered, which require separate calibration between two sensors and finally integration. In addition, traditional calibration processes are complicated, requiring a lot of manual optimization, iteration and parameter adjustment. Moreover, traditional calibration methods have strict requirements on scenes, and there are too many targets to be calibrated, each calibration requires a large number of professional engineers to spend a lot of time, and the quality of calibrated parameters are not high. Furthermore, if there is a slight rigid deformation between the sensors, it is necessary to re-calibrate.

It should be noted that information disclosed in the above background art section is only used to enhance the understanding of the background of the present disclosure, and therefore may include information that does not constitute the prior art known to those of ordinary skill in the art.

## SUMMARY

In view of the problems in the prior art, the present disclosure provides a method, a system, a device and a storage medium for jointly calibrating multiple radars and camera to overcome the difficulties in the prior art. The present disclosure obtains world coordinates of reference points on a same calibration plate through three different sensors at the same time, and then achieves joint calibration through iterating and matching, which reduces steps of calibrating multiple sensors and accelerates speed of jointly calibrating.

Embodiments of the present disclosure provide a method for jointly calibrating multiple radars and camera, including steps of: S 100, configuring multiple radar sensors and a camera sensor to jointly form a public field of view; S200, arranging a calibration plate successively at a plurality of target positions in the public field of view, obtaining detection data from the radar sensors and the camera sensor for the calibration plate at different target positions, and obtaining coordinate information of centers of a plurality of calibration patterns respectively in three-dimensional coordinate systems of the radar sensors and the camera sensor; wherein, the calibration patterns are provided on the calibration plate, and each of the calibration patterns is composed of materials with different reflection coefficients arrayed around the center of the calibration pattern; S300, jointly calibrating according to the coordinate information.

In some embodiments, in the step S 100, configure a millimeter wave radar sensor, a laser radar sensor and the camera sensor to jointly form the public field of view; in the step S200, arrange the same calibration plate successively at W target positions in the public field of view, collect positioning information detected by the millimeter wave radar sensor, the laser radar sensor and the camera sensor when the calibration plate is respectively located at each of the target positions, and the millimeter wave radar sensor, the laser radar sensor and the camera sensor synchronously detect the calibration plate located at each target position to respectively obtain center positioning information about central symmetric pattern reflecting areas; wherein, the calibration plate includes a reflecting plate, p central symmetric pattern reflecting areas embedded in the reflecting plate at a same layer, and reflectors concentrically arranged in centers of the central symmetric pattern reflecting areas and convex on a surface of the reflecting plate, wherein reflectivity of the reflecting plate, reflectivity of the central symmetric pattern reflecting areas and reflectivity of the reflectors are diverse from each other; in the step S300, jointly calibrate according to the center positioning information of the millimeter wave radar sensor, the laser radar sensor and the camera sensor under different target positions.

In some embodiments, the step S100 includes: rigidly connecting the millimeter wave radar sensor, the laser radar sensor and the camera sensor, making detection directions of the millimeter wave radar sensor, the laser radar sensor and the camera sensor jointly converge to the public field of view.

In some embodiments, the step S200 includes: making the calibration plate at the target position completely appear in an image of the camera sensor and in detection ranges of the millimeter wave radar sensor and the laser radar sensor.

In some embodiments, in the step 200, the camera sensor obtaining the center positioning information of the central symmetric pattern reflecting areas includes steps of: S211, the camera sensor taking images of the reflecting plate; S212, performing image recognition on the images to obtain a first pattern trajectory of the central symmetric pattern reflecting areas; S213, obtaining centers of the central symmetric pattern reflecting areas according to the first pattern trajectory; S214, obtaining three-dimensional coordinates of the centers in the three-dimensional coordinate system of the camera sensor based on the three-dimensional coordinate system of the camera sensor.

In some embodiments, the reflecting plate is rectangular, and the step S211 includes rectangularity correcting on the images.

In some embodiments, in the step S200, the laser radar sensor obtaining the center positioning information of the central symmetric pattern reflecting areas includes steps of: S221, the laser radar sensor scanning the reflecting plate; S222, obtaining a second pattern trajectory that distinguishes the reflecting plate from the central symmetric pattern reflecting areas, according to reflectivity difference between the reflecting plate and the central symmetric pattern reflecting areas detected by the laser radar sensor; S223, obtaining centers of the central symmetric pattern reflecting areas according to the second pattern trajectory; S224, obtaining three-dimensional coordinates of the centers in the three-dimensional coordinate system of the laser radar sensor based on the three-dimensional coordinate system of the laser radar sensor.

In some embodiments, in the step S200, the millimeter wave radar sensor obtaining the center positioning information of the central symmetric pattern reflecting areas includes steps of: S231, the millimeter wave radar sensor scanning shapes of the reflectors on the calibration plate; S232, obtaining three-dimensional coordinates of the reflectors in the three-dimensional coordinate system of the millimeter wave radar sensor based on the three-dimensional coordinate system of the millimeter wave radar sensor; S233, obtaining three-dimensional coordinates of the centers in the three-dimensional coordinate system of the millimeter wave radar sensor, according to a preset position relation between the reflectors and the centers of the central symmetric pattern reflecting areas.

In some embodiments, the step S300 includes steps of:

setting "$y = \{y_1, .... y_W\}$" as target features of each sensor, "$u_k^i$" as the target positions of the calibration plate, "k" as a position number of the calibration plate, and "c", "l" and "r" respectively as the camera sensor, the laser radar sensor and the millimeter wave radar sensor;

obtaining a 4 × 4 conversion matrix "$T^{c,l} = \begin{bmatrix} R_1 & t_1 \\ \hline 0 & 1 \end{bmatrix}$" from the camera sensor to the laser radar sensor, wherein "$R_1$" and "$t_1$" are respectively a 3 × 3 rotation matrix and a 3 × 1 translation matrix from the camera sensor to the laser radar sensor;

for the calibration plate at a position "k", using Euclidean distance between corresponding centers of circles to represent an error of the conversion matrix between the camera sensor and the laser radar sensor:

$$e_k^{c,l} = \sum_{p=1}^{4} \| y_{k,p}^c - T^{c,l} \cdot y_{k,p}^l \|^2 \qquad (1),$$

wherein, "$e_k^{c,l}$" represents a matching error of extrinsic parameters between the camera sensor and the laser radar sensor under the position "k", "$y_{k,p}^c$" represents three-dimensional coordinates of a center of a circle "p" in the coordinate system of the camera sensor when the calibration plate is at the position "k", "$y_{k,p}^l$" represents three-dimensional coordinates of the center of the circle "p" conversed to the coordinate system of the camera sensor from the laser radar sensor when the calibration plate is at the position "k", "$T^{c,l}$" represents the rotation and translation matrix from the camera sensor to the laser radar sensor, and "p" represents a number of circles in the calibration plate;

obtaining a 4 × 4 conversion matrix "$T^{r,l} = \begin{bmatrix} R_2 & t_2 \\ \hline 0 & 1 \end{bmatrix}$" from the millimeter wave radar sensor to the laser radar sensor, wherein "$R_2$" and "$t_2$" are respectively a 3 × 3 rotation matrix and a 3 × 1 translation matrix from the millimeter wave radar sensor to the laser radar sensor;

for the calibration plate at the position "k", representing an error between the millimeter wave radar sensor and the laser radar sensor as following equation:

$$e_k^{r,l} = \sum_{p=1}^{4} \| y_{k,p}^r - T^{r,l} \cdot y_{k,p}^l \|^2 \qquad (2),$$

wherein, "$e_k^{r,l}$" represents a matching error of extrinsic parameters between the millimeter wave radar sensor and the laser radar sensor under the position "k", "$y_{k,p}^r$" represents three-dimensional coordinates of the center of the circle "p" in the coordinate system of the millimeter wave radar sensor when the calibration plate is at the position "k", "$y_{k,p}^l$" represents three-dimensional coordinates of the center of the circle "p" conversed to the coordinate system of the camera sensor from the laser radar sensor when the calibration plate is at the position "k", "$T^{r,l}$" represents the rotation and translation matrix from the millimeter wave radar sensor to the laser radar sensor, and "p" represents the number of the circles in the calibration plate;
converting Euclidean space representation to a spherical coordinate system, represented by a coordinate "$(r_k, \varphi_k, \psi_k)$" as:

$$e_k^{r,1} = \sum_{p=1}^{4} \| y_{(r_k,\varphi_k,\psi_k)}^{r} - T^{r,l} \cdot y_{(r_k,\varphi_k,\psi_k)}^{1} \|^2 \quad (3),$$

wherein, "$y_{(r_k,\varphi_k,\psi_k)}^{r}$" represents spherical coordinates of a center of the calibration plate in the coordinate system of the millimeter wave radar sensor when the calibration plate is at the position "k", "$\psi_k$" represents an unknown pitch angle and its initial value is 0, and "$y_{(r_k,\varphi_k,\psi_k)}^{r}$" represents spherical coordinates of the center of the calibration plate in the coordinate system of the laser radar sensor;
defining a maximum "$\psi_{max}$" based on a vertical field angle of the millimeter wave radar sensor and obtaining:

$$|\psi_k| - \psi_{max} \leq 0, \quad \forall k \quad (4);$$

for the calibration plate at a position "W", using "$f(\theta^{c,l})$" to represent a total error between the camera sensor and the laser radar sensor:

$$f(\theta^{c,l}) = \sum_{k=1}^{W} \mu_k^l \cdot \mu_k^c \cdot e_k(\theta^{c,l}) \quad (5),$$

using "$f(\theta^{r,l})$" to represent a total error between the millimeter wave radar sensor and the laser radar sensor:

$$f(\theta^{r,l}) = \sum_{k=1}^{W} \mu_k^l \cdot \mu_k^r \cdot e_k(\theta^{r,l}) \quad (6),$$

wherein, "$\mu_k^l \cdot \mu_k^c$" represents whether a parameter between the camera sensor and the laser radar sensor exists, if the parameter exists, "$\mu_k^l \cdot \mu_k^c$" is 1, and if the parameter does not exist, "$\mu_k^l \cdot \mu_k^c$" is 0; "$\mu_k^l \cdot \mu_k^r$" represents whether a parameter between the millimeter wave radar sensor and the laser radar sensor exists, if the parameter exists, "

"$\mu_k^l \cdot \mu_k^r$" is 1, and if the parameter does not exist, "$\mu_k^l \cdot \mu_k^r$" is 0;
iterating and optimizing the "$f(\theta^{c,l})$" and the "$f(\theta^{c,l})$" with a least square method, obtaining the conversion matrix form the camera sensor to the laser radar sensor when the "$f(\theta^{c,l})$" is minimum, and obtaining the conversion matrix form the millimeter wave radar sensor to the laser radar sensor when the "$f(\theta^{r,l})$" is minimum.

Embodiments of the present disclosure further provide a system for jointly calibrating multiple radars and camera, wherein the system is used to achieve the method described above and includes: a public field of view module, used to configure multiple radar sensors and a camera sensor to jointly form a public field of view; a coordinate detection module, used to arrange a calibration plate successively at a plurality of target positions in the public field of view, obtain detection data from the radar sensors and the camera sensor for the calibration plate at different target positions, and obtain coordinate information of centers of a plurality of calibration patterns respectively in three-dimensional coordinate systems of the radar sensors and the camera sensor; wherein, the calibration patterns are provided on the calibration plate, and each of the calibration patterns is composed of materials with different reflection coefficients arrayed around the center of the calibration pattern; a joint calibration module, used to jointly calibrate according to the coordinate information.

Embodiments of the present disclosure further provide a device for jointly calibrating multiple radars and camera, including: a processor; a memory storing executable instructions executed by the processor; wherein, the processor is configured to execute the steps of the method for jointly calibrating multiple radars and camera described above, by executing the executable instructions.

Embodiments of the present disclosure further provide a computer-readable storage medium for storing programs, wherein when the programs are executed, the steps of the method for jointly calibrating multiple radars and camera described above are implemented.

The method, the system, the device and the storage medium for jointly calibrating multiple radars and camera of the present disclosure can obtain the world coordinates of the reference points on the same calibration plate through the three different sensors at the same time, and then achieves joint calibration through iterating and matching, which reduces the steps of calibrating multiple sensors and accelerates the speed of jointly calibrating.

**BRIEF DESCRIPTION OF THE DRAWINGS**

Other features, purposes, and advantages of the present disclosure will become more apparent by reading detailed description of non-restrictive embodiments with reference to the accompanying drawings below.

FIG. 1 is a flow chart of a method for jointly calibrating multiple radars and camera according to an embodiment of the present disclosure.

FIGS. 2 to 4 are schematic diagrams showing implementation process of the method for jointly calibrating multiple radars and camera according to an embodiment of the present disclosure.

FIG. 5 is a structural diagram of a system for jointly calibrating multiple radars and camera according to an embodiment of the present disclosure.

FIG. 6 is a structural diagram of a device for jointly calibrating multiple radars and camera according to an embodiment of the present disclosure.

FIG. 7 is a structural diagram of a computer-readable storage medium according to an embodiment of the present disclosure.

## DETAILED DESCRIPTION

Exemplary implementations will now be described more fully with reference to the accompanying drawings. The exemplary implementations can be implemented in many forms and should not be construed as being limited to the implementations set forth herein. On the contrary, these implementations are provided to make the present disclosure thorough and complete, and to fully convey the concept of the exemplary implementations to those skilled in the art. In the accompanying drawings, the same reference numerals denote the same or similar parts, and thus repeated description thereof will be omitted.

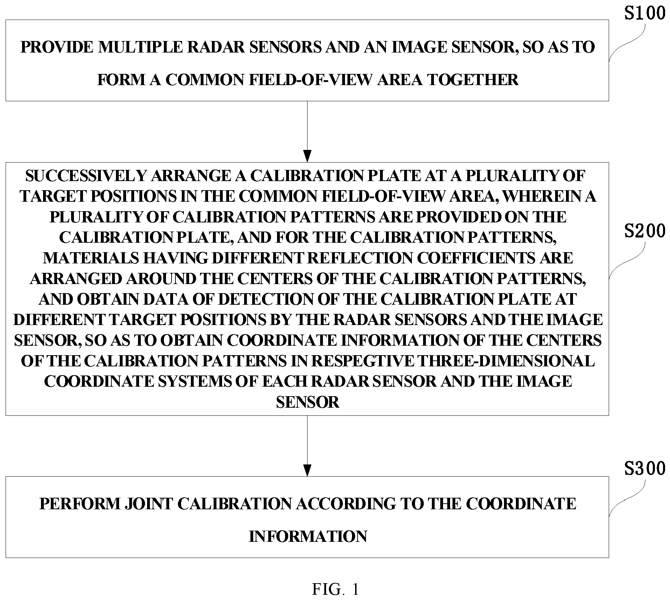

FIG. 1 is a flow chart of a method for jointly calibrating multiple radars and camera according to an embodiment of the present disclosure. As shown in FIG. 1, the embodiment provides a method for jointly calibrating multiple radars and camera, including the following steps.

S100, configure multiple radar sensors and a camera sensor to jointly form a public field of view.

S200, arrange a calibration plate successively at a plurality of target positions in the public field of view, obtain detection data from the radar sensors and the camera sensor for the calibration plate at different target positions, and obtain coordinate information of centers of a plurality of calibration patterns respectively in three-dimensional coordinate systems of the radar sensors and the camera sensor. Wherein, the calibration patterns are provided on the calibration plate, and each of the calibration patterns is composed of materials with different reflection coefficients arrayed around the center of the calibration pattern.

S300, jointly calibrate according to the coordinate information.

In a preferred embodiment, at least one radar sensor obtains positioning information of a trajectory of each calibration pattern by analyzing reflection data, and then obtains the center of the calibration pattern by image processing. However, the present disclosure is not limited to this embodiment.

In a preferred embodiment, at least one radar sensor obtains positioning information of calibration objects at the center of each calibration pattern by analyzing the reflection data, and then obtains the center of the calibration pattern by a preset spatial position relation between the calibration objects and the center of the calibration pattern. However, the present disclosure is not limited to this embodiment.

In a preferred embodiment, at least one camera sensor obtains the positioning information of the trajectory of each calibration pattern through recognition, and then obtains the center of the calibration pattern through image processing. However, the present disclosure is not limited to this embodiment.

In order to overcome problems, caused by traditional method for jointly calibrating multiple sensors based on hand-eye calibration, such as low accuracy and complex process, the present disclosure provides a fully automatic method for jointly calibrating a millimeter wave radar, a laser radar and a camera. The present disclosure does not need to manually adjust and align calibration parameters, has high calibration accuracy, simple process, and can realize mass production, so as to realize high-precision mass production of joint calibration in a real sense.

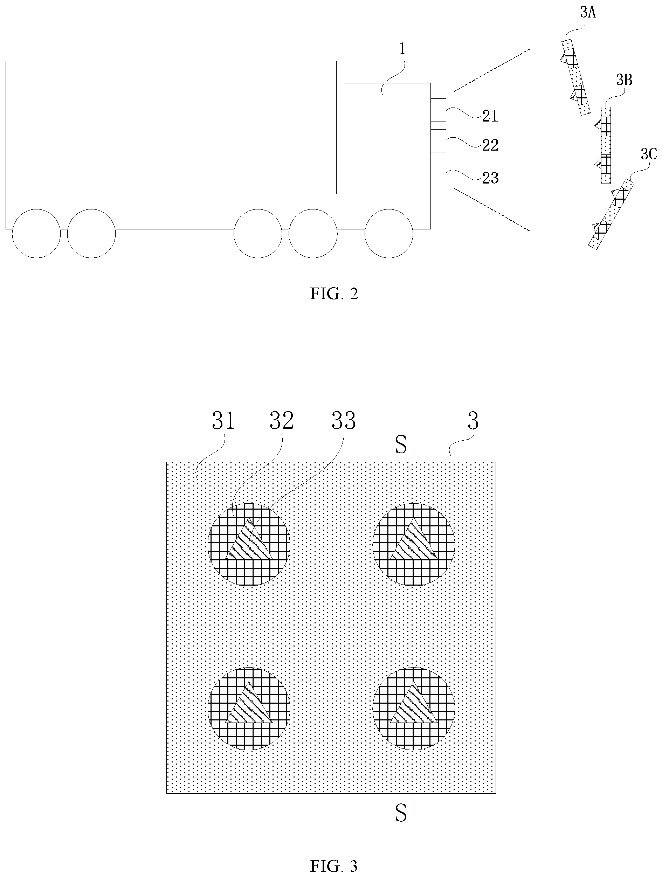

FIGS. 2 to 4 are schematic diagrams showing implementation process of the method for jointly calibrating multiple radars and camera in this embodiment. As shown in FIGS. 2 to 4, the implementation process of the method in this embodiment includes the following steps.

In the step S100, rigidly connect the millimeter wave radar sensor 21, the laser radar sensor 22 and the camera sensor 23 on a front end of a truck 1, and make detection directions of the millimeter wave radar sensor 21, the laser radar sensor 22 and the camera sensor 23 jointly converge to the public field of view.

In the step S200, arrange the same calibration plate successively at W target positions (including a first target position 3A, a second target position 3B and a third target position 3C shown in FIG. 2) in the public field of view, make the calibration plate at each target position completely appear in an image of the camera sensor 23 and in detection ranges of the millimeter wave radar sensor 21 and the laser radar sensor 22. Wherein, the calibration plate 3 includes a reflecting plate 31, p central symmetric pattern reflecting areas 32 embedded in the reflecting plate 31 at a same layer (in this embodiment, there are four circular areas embedded in the reflecting plate 31 at a same layer), and reflectors 33 concentrically arranged in centers of the central symmetric pattern reflecting areas 32 and convex on a surface of the reflecting plate 31, wherein reflectivity of the reflecting plate 31, reflectivity of the central symmetric pattern reflecting areas 32 and reflectivity of the reflectors 33 are diverse from each other. In this embodiment, the reflecting plate 31 is made of low reflective foams, the central symmetric pattern reflecting areas 32 are made of high reflective papers, and the reflectors 33 are metal triangular pyramid reflectors. The reflectivity of the metal triangular pyramid reflectors is greater than the reflectivity of the high reflective papers, and the reflectivity of the high reflective papers is greater than the reflectivity of the low reflective foams. Furthermore, collect positioning information detected by the millimeter wave radar sensor 21, the laser radar sensor 22 and the camera sensor 23 when the calibration plate is respectively located at each of the target positions, and the millimeter wave radar sensor 21, the laser radar sensor 22 and the camera sensor 23 synchronously detect the calibration plate located at each target position (see the first target position 3A, the second target position 3B and the third target position 3C shown in FIG. 2) to respectively obtain center positioning information about the central symmetric pattern reflecting areas 32.

In the step S300, jointly calibrate according to the center positioning information of the millimeter wave radar sensor 21, the laser radar sensor 22 and the camera sensor 23 under different target positions.

In a preferred embodiment, the camera sensor 23 obtaining the center positioning information of the central symmetric pattern reflecting areas 32 includes the following steps.

S211, the camera sensor 23 takes images of the reflecting plate 31 and corrects the images into rectangular, wherein the reflecting plate 31 is rectangular.

S212, perform image recognition on the images to obtain a first pattern trajectory of the central symmetric pattern reflecting areas 32. In this embodiment, existing image recognition methods can be used to recognize the central symmetric pattern reflecting areas 32 repeated in the images, and obtain an unknown region of each central symmetric pattern reflecting area 32. However, the present disclosure is not limited to this embodiment.

S213, obtain centers of the central symmetric pattern reflecting areas 32 according to the first pattern trajectory. Specifically, according to each first pattern trajectory, obtain its corresponding internal center position through graph processing algorithms. However, the present disclosure is not limited to this embodiment.

S214, obtain three-dimensional coordinates of the centers in the three-dimensional coordinate system of the camera sensor 23 based on the three-dimensional coordinate system of the camera sensor 23.

In a preferred embodiment, the laser radar sensor 22 obtaining the center positioning information of the central symmetric pattern reflecting areas 23 includes the following steps.

S221, the laser radar sensor 22 scans the reflecting plate.

S222, obtain a second pattern trajectory that distinguishes the reflecting plate 31 from the central symmetric pattern reflecting areas 32, according to reflectivity difference between the reflecting plate 31 and the central symmetric pattern reflecting areas 32 detected by the laser radar sensor 22. In this embodiment, the reflecting plate 31 and the central symmetric pattern reflecting areas 32 are respectively composed of two materials with great reflection difference. Therefore, by analyzing the reflection data of the laser radar sensor 22, boundaries between the reflecting plate 31 and the central symmetric pattern reflecting areas 32 can be obtained as the second pattern trajectory. However, the present disclosure is not limited to this embodiment.

S223, obtain centers of the central symmetric pattern reflecting areas 32 according to the second pattern trajectory. Specifically, according to each second pattern trajectory, obtain its corresponding internal center position through graph processing algorithms. However, the present disclosure is not limited to this embodiment.

S224, obtain three-dimensional coordinates of the centers in the three-dimensional coordinate system of the laser radar sensor 22 based on the three-dimensional coordinate system of the laser radar sensor 22.

In a preferred embodiment, the millimeter wave radar sensor 21 obtaining the center positioning information of the central symmetric pattern reflecting areas 32 includes the following steps.

S231, the millimeter wave radar sensor 21 scans shapes of the reflectors 33 on the calibration plate. In this embodiment, the reflectors 33 are metal corner reflectors with high reflectivity, so that positions of the metal corner reflectors can be obtained by analyzing the reflection data of the millimeter wave radar sensor 21. However, the present disclosure is not limited to this embodiment.

S232, obtain three-dimensional coordinates of the reflectors 33 in the three-dimensional coordinate system of the millimeter wave radar sensor 21 based on the three-dimensional coordinate system of the millimeter wave radar sensor 21.

S233, obtain three-dimensional coordinates of the centers in the three-dimensional coordinate system of the millimeter wave radar sensor 21, according to a preset position relation between the reflectors 33 and the centers of the central symmetric pattern reflecting areas 32. For example, obtain the centers of the calibration patterns according to a preset spatial position relation between the metal corner reflectors and the centers of the central symmetric pattern reflecting areas 32. However, the present disclosure is not limited to this embodiment.

In a preferred embodiment, in the step S300, jointly calibrate according to the center positioning information of the millimeter wave radar sensor 21, the laser radar sensor 22 and the camera sensor 23 at different target positions. The step S300 includes the following steps.

Set "y = {$y_1,...y_W$}" as target features of each sensor, " $u_k^i$ " as the target positions of the calibration plate, "k" as a position number of the calibration plate, and "c", "l" and "r" respectively as the camera sensor 23, the laser radar sensor 22 and the millimeter wave radar sensor 21.

Obtain a 4 × 4 conversion matrix " $T^{c,l} = \begin{bmatrix} R_1 & t_1 \\ 0 & 1 \end{bmatrix}$ " from the camera sensor 23 to the laser radar sensor 22, wherein "$R_1$" and "$t_1$" are respectively a 3 × 3 rotation matrix and a 3 × 1 translation matrix from the camera sensor 23 to the laser radar sensor 22.

For the calibration plate at a position "k", use Euclidean distance between corresponding centers of circles to represent an error of the conversion matrix between the camera sensor 23 and the laser radar sensor 22:

$$e_k^{c,l} = \sum_{p=1}^{4} \| y_{k,p}^c - T^{c,l} \cdot y_{k,p}^l \|^2 \quad (1),$$

Wherein, " $e_k^{c,l}$ " represents a matching error of extrinsic parameters between the camera sensor 23 and the laser radar sensor 22, " $y_{k,p}^c$ " represents three-dimensional coordinates of a center of a circle "p" in the coordinate system of the camera sensor 23, " $y_{k,p}^l$ " represents three-dimensional coordinates of the center of the circle "p" conversed to the coordinate system of the camera sensor 23 from the laser radar sensor 22, "$T^{c,l}$" represents the rotation and translation matrix from the camera sensor 23 to the laser radar sensor 22, and "p" represents a number of circles in the calibration plate.

Obtain a 4 × 4 conversion matrix " $T^{r,l} = \begin{bmatrix} R_2 & t_2 \\ 0 & 1 \end{bmatrix}$ " from the millimeter wave radar sensor 21 to the laser radar sensor 22, wherein "$R_2$" and "$t_2$" are respectively a 3 × 3 rotation matrix and a 3 × 1 translation matrix from the millimeter wave radar sensor 21 to the laser radar sensor 22.

For the calibration plate at the position "k", represent an error between the millimeter wave radar sensor 21 and the laser radar sensor 22 as following equation:

$$e_k^{r,l} = \sum_{p=1}^{4} \| y_{k,p}^r - T^{r,l} \cdot y_{k,p}^l \|^2 \quad (2),$$

Wherein, " $e_k^{r,l}$ " represents a matching error of extrinsic parameters between the millimeter wave radar sensor 21 and the laser radar sensor 22, " $y_{k,p}^r$ " represents three-dimensional coordinates of the center of the circle "p" in the coordinate system of the millimeter wave radar sensor 21, " $y_{k,p}^l$ " represents three-dimensional coordinates of the center of the circle "p" conversed to the coordinate system of the camera sensor 23 from the laser radar sensor 22, "$T^{r,l}$" represents the rotation and translation matrix from the millimeter wave radar sensor 21 to the laser radar sensor 22, and "p" represents the number of the circles in the calibration plate.

Convert Euclidean space representation to a spherical coordinate system, represented by a coordinate "$(r_k,\varphi_k,\psi_k)$" as:

$$e_k^{r,l} = \sum_{p=1}^{4} \| y_{(r_k,\varphi_k,\psi_k)}^r - T^{r,l} \cdot y_{(r_k,\varphi_k,\psi_k)}^l \|^2 \quad (3),$$

Wherein, " $y_{(r_k,\varphi_k,\psi_k)}^r$ " represents spherical coordinates of a center of the calibration plate in the coordinate system of the millimeter wave radar sensor 21, "$\psi_k$" represents an unknown pitch angle and its initial value is 0, and " $y_{(r_k,\varphi_k,\psi_k)}^r$ " represents spherical coordinates of the center of the calibration plate in the coordinate system of the laser radar sensor 22.

Define a maximum "$\psi_{max}$" based on a vertical field angle of the millimeter wave radar sensor and obtain:

$$|\psi_k| - \psi_{max} \le 0, \quad \forall k \quad (4).$$

For the calibration plate at a position "W", use "f($\theta^{c,l}$)" to represent a total error between the camera sensor and the laser radar sensor and use "f($\theta^{r,l}$)" to represent a total error between the millimeter wave radar sensor and the laser radar sensor:

$$f(\theta^{c,l}) = \sum_{k=1}^{W} \mu_k^l \cdot \mu_k^c \cdot e_k(\theta^{c,l}) \quad (5),$$

$$f(\theta^{r,l}) = \sum_{k=1}^{W} \mu_k^l \cdot \mu_k^r \cdot e_k(\theta^{r,l}) \quad (6);$$

Wherein, " $\mu_k^l \cdot \mu_k^c$ " represents whether a parameter between the camera sensor 23 and the laser radar sensor 22 exists, if the parameter exists, " $\mu_k^l \cdot \mu_k^c$ " is 1, and if the parameter does not exist, " $\mu_k^l \cdot \mu_k^c$ " is 0; " $\mu_k^l \cdot \mu_k^r$ " represents whether a parameter between the millimeter wave radar sensor 21 and the laser radar sensor 22 exists, if the parameter exists, " $\mu_k^l \cdot \mu_k^r$ " is 1, and if the parameter does not exist, " $\mu_k^l \cdot \mu_k^r$ " is 0.

Iterate and optimize the "f($\theta^{c,l}$)" and the "f($\theta^{r,l}$)" with a least square method, obtain the conversion matrix form the camera sensor 23 to the laser radar sensor 22 when the "f($\theta^{c,l}$)" is minimum, and obtain the conversion matrix form the millimeter wave radar sensor 21 to the laser radar sensor 22 when the "f($\theta^{r,l}$)" is minimum. However, the present disclosure is not limited to this embodiment.

In a variant embodiment, the present disclosure can use other existing or future joint calibration algorithms to jointly calibrate according to the center positioning information of the millimeter wave radar sensor 21, the laser radar sensor 22 and the camera sensor 23 under different target positions.

The technical proposal adopted by the present disclosure to solve the technical problem is: rigidly connecting the millimeter wave radar, the laser radar and the camera, ensuring relative positions thereof unchanged, and placing the specially designed joint calibration plate in the public field of view of the three sensors. Different from traditional methods using a calibration plate between two sensors and different calibration plates respectively calibrate different sensors, the specially designed joint calibration plate of the present disclosure integrates the target features of the three sensors in one, thereby realizing any coordinate conversion between the three sensors, and the whole calibration process can be completed by one calibration plate, thus improving accuracy and robustness.

Combined with the joint calibration plate of the present disclosure and matching data of the sensors frame by frame, coordinates of centers of four circles in the images, three-dimensional coordinates of three center points in point cloud data of the laser radar and three-dimensional coordinates of a center point of the reflector 33 minus a depth of the reflector 33 in the data of the millimeter wave radar can be obtained, respectively. In the present disclosure, calibration and conversion of the three sensors are point-to-point matching, and a minimum error is finally obtained by iterating and optimizing through the iterating and matching algorithm of the present disclosure and combined with multiple groups of data, and the conversion matrix obtained under the minimum error is the extrinsic parameter matrix. Then the data of the three sensors are pairwise verified and results will be output when the verification is correct. Through the specially designed joint calibration plate of the present disclosure, world coordinates of the circles on the calibration plate are obtained by the three different sensors at the same time, and the accurate coordinate conversion matrix will be finally calculated by iterating and matching through the algorithm of the present disclosure.

The present disclosure provides a scheme with high efficiency, high precision, less environmental dependence, simple calibration process and rapid calibration speed, which can solve the problems of synchronous calibration for multiple sensors, provide a feasible scheme for joint calibration mass production, reduce the steps of multiple sensors calibration and accelerate the speed of joint calibration.

In the present disclosure, 1 to N (can be any) circular reflective substrates with different reflectivity can be regularly arranged on a rectangular plate, a triangular concave hole can be cut out in each circular reflective substrate, and a metal corner reflector can be fixed in each triangular concave hole.

The present disclosure rigidly connects three sensors of the millimeter wave radar, the laser radar and the camera, keeps relative coordinates thereof unchanged, and furhter makes a specific calibration plate and places it in the public field of view of the three sensors.

Features collected by the three sensors are different. The millimeter wave radar obtains stable and high precision center points of triangles, i.e., the centers of the circles, and RCS values through angle reflectors. The laser radar extracts the circles by reflectivity, according to reflectivity difference between different materials, and obtains the three-dimensional coordinates of the centers of the circles through edges of the circles. The camera obtains the coordinates of the centers of the circles in the images after distortion processing and Hough circle transformation on the images, and then ICP registering the camera with the laser radar, the x, y and z coordinates of the centers of the circles in the coordinate system of the camera can be obtained.

After the coordinates of common feature points of the three sensors are obtained, the next step is to match the coordinates of respective target centers of the circles of the three sensors. During the calibration process, the calibration plate can be changed to W different positions, so each sensor has W target features "y = $\{y_1,...y_W\}$". For the camera and the laser radar, a center of each circle contains three-dimensional coordinate features "x, y and z", and for the millimeter wave radar, there are three-dimensional features "x, y and z=0".

Since each sensor has a different field of view, the calibration plate needs to be placed in the public field of view. Target positions of the calibration plate are represented by " $u_k^i$ ", wherein "k" represents the position number of the calibration plate and "i" represents the number of the sensor. In the present disclosure, the extrinsic parameter matrix between different sensors is represented by "$T^{1,2}$", and "

$$T^{1,2} = \begin{bmatrix} R & t \\ 0 & 1 \end{bmatrix}$$

" represents rotation "R" and translation "t" from sensor 1 to sensor 2, that is, a 4 × 4 homogeneous equation, which represents 6 degrees of freedom.

For the calibration plate at the position "k", use Euclidean distance between corresponding centers of circles to represent the error of the conversion matrix between the camera sensor and the laser radar sensor, which is represented as a formula (1):

$$e_k^{c,l} = \sum_{p=1}^{4} \| y_{k,p}^{c} - T^{c,l} \cdot y_{k,p}^{l} \|^2 \quad (1),$$

Wherein, "$e_k^{c,l}$" represents the matching error of the extrinsic parameters between the camera sensor and the laser radar sensor, "$y_{k,p}^{c}$" represents three-dimensional coordinates of the center of the circle "p" in the coordinate system of the camera sensor, "$y_{k,p}^{l}$" represents three-dimensional coordinates of the center of the circle "p" conversed to the coordinate system of the camera sensor from the laser radar sensor, "$T^{c,l}$" represents the rotation and translation matrix from the camera sensor to the laser radar sensor, and "p" (from 1 to 4) represents the number of circles in the calibration plate.

For the millimeter wave radar and the laser radar, when the calibration plate is at the position "k", the error equation is represented as a formula (2):

$$e_k^{r,l} = \sum_{p=1}^{4} \| y_{k,p}^{r} - T^{r,l} \cdot y_{k,p}^{l} \|^2 \quad (2),$$

Wherein, "$e_k^{r,l}$" represents the matching error of the extrinsic parameters between the millimeter wave radar and the laser radar, "$y_{k,p}^{r}$" represents three-dimensional coordinates (initially, "z" defaults to 0) of the center of the circle "p" in the coordinate system of the millimeter wave radar, "$y_{k,p}^{l}$" represents the three-dimensional coordinates of the center of the circle "p" conversed to the coordinate system of the camera from the laser radar, "$T^{r,l}$" represents the rotation and translation matrix from the millimeter wave radar to the laser radar, and "p" (from 1 to 4) represents the number of the circles in the calibration plate.

The formula (2) differs from the formula (1) in that "$y_{k,p}^{r}$" has one more unknown than "$y_{k,p}^{c}$", that is, a value in Z-axis direction of the millimeter wave radar. In the formula (2), it is difficult to find the value in the Z-axis direction for each position; as a solution, convert Euclidean space representation to the spherical coordinate system, substitute the coordinate "$(r_k, \varphi_k, \psi_k)$" into the formula (2) and obtain:

$$e_k^{r,l} = \sum_{p=1}^{4} \| y_{(r_k, \varphi_k, \psi_k)}^{r} - T^{r,l} \cdot y_{(r_k, \varphi_k, \psi_k)}^{l} \|^2 \quad (3),$$

Wherein, "$y_{(r_k, \varphi_k, \psi_k)}^{r}$" represents the spherical coordinates of the center of the calibration plate in the coordinate system of the millimeter wave radar, "$\psi_k$" represents the unknown pitch angle and its initial value is 0, and "$y_{(r_k, \varphi_k, \psi_k)}^{r}$" represents the spherical coordinates of the center of the calibration plate in the coordinate system of the laser radar.

Since there is no pitch angle parameter in the millimeter wave radar, the calibration of the millimeter wave radar can be converted into iterating band optimizing problems, define the maximum "$\psi_{max}$" based on the vertical field angle of the millimeter wave radar and obtain:

$$|\psi_k| - \psi_{max} \le 0, \quad \forall k \quad (4);$$

Therefore, the extrinsic parameter relations betwwen the three sensors are transformed into iterating and optimizing problems. For the calibration plate at the position "W", use "$f(\theta^{1,2})$" to represent the total error between two sensors:

$$f(\theta^{1,2}) = \sum_{k=1}^{W} \mu_k^2 \cdot \mu_k^1 \cdot e_k(\theta^{1,2}) \quad ;$$

Wherein, "$\mu_k^2 \cdot \mu_k^1$" represents whether a parameter between the two sensors exists, if the parameter exists, "$\mu_k^2 \cdot \mu_k^1$" is 1, and if the parameter does not

exist, "$\mu_k^2 \cdot \mu_k^1$" is 0. Substitute "$e_k(\theta^{1,2})$" into the formula (1) and the formula (2), and the "$f(\theta^{1,2})$" can be iterated and optimized by the least square method.

When the "$f(\theta^{1,2})$" is minimum, a corresponding solution is the optimal solution, that is, the rotation and translation matrix.

In the pose optimization process between the three sensors of the present disclosure, coordinates of any sensor can be set as the reference coordinates, therefore, an iterating and optimizing equation can be formed between two sensors, and the total error can be represented as:

$$\mathrm{f}(\theta) = \sum_{i=1}^{N} \sum_{j=i+1}^{N} \left[ \sum_{k=1}^{W} \mu_k^i \cdot \mu_k^j \cdot \mathrm{e}_k(\theta^{i,j}) \right]_k ,$$

In this equation, "$l$" represents a closed loop, then a product of all closed loops is equal to an identity matrix:

$$(T^{sl,1} \cdot T^{sl-1,sl} \cdot \dots T^{1,2}) - I = 0, \forall l ,$$

Wherein, "$sl$" is a total number of sensors in the closed loop "$l$", by adding all the errors together, optimization results with more robust can be obtained.

Through the above equations, the minimum error is finally optimized, and the transformation matrix corresponding to the minimum error is the extrinsic parameter matrix. The present disclosure can efficiently and accurately calibrate the millimeter wave radar, the laser radar and the camera, and achieve mass production.

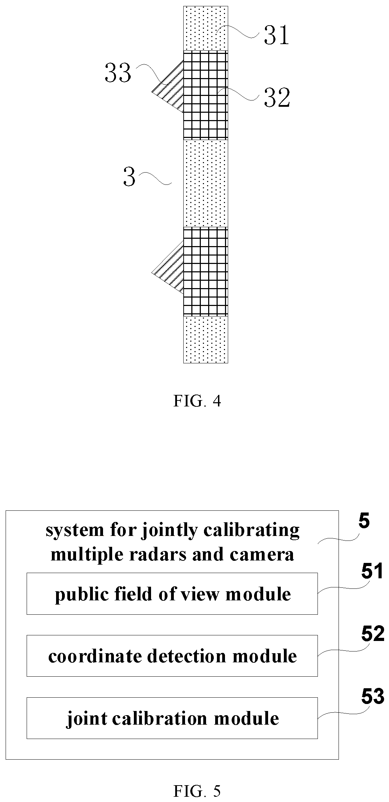

FIG. 5 is a structural diagram of a system for jointly calibrating multiple radars and camera according to an embodiment of the present disclosure. As shown in FIG. 5, this embodiment provides a system 5 for jointly calibrating multiple radars and camera, the system 5 is used to achieve the method for jointly calibrating multiple radars and camera and includes the following modules.

A public field of view module 51, is used to configure multiple radar sensors and an image sensor to jointly form a public field of view.

A coordinate detection module 52, is used to arrange a calibration plate successively at a plurality of target positions in the public field of view, obtain detection data from the radar sensors and the image sensor for the calibration plate at different target positions, and obtain coordinate information of centers of a plurality of calibration patterns respectively in three-dimensional coordinate systems of the radar sensors and the image sensor. Wherein, the calibration patterns are provided on the calibration plate, and each of the calibration patterns is composed of materials with different reflection coefficients arrayed around the center of the calibration pattern.

A joint calibration module 53, is used to jointly calibrate according to the coordinate information.

The system for jointly calibrating multiple radars and camera of the present disclosure can obtain the world coordinates of the reference points on the same calibration plate through the three different sensors at the same time, and then achieves joint calibration through iterating and matching, which reduces the steps of calibrating multiple sensors and accelerates the speed of jointly calibrating.

Embodiments of the present disclosure further provide a device for jointly calibrating multiple radars and camera, including: a processor; a memory storing executable instructions executed by the processor; wherein, the processor is configured to execute the steps of the method for jointly calibrating multiple radars and camera by executing the executable instructions.

The device for jointly calibrating multiple radars and camera of the present disclosure can obtain the world coordinates of the reference points on the same calibration plate through the three different sensors at the same time, and then achieves joint calibration through iterating and matching, which reduces the steps of calibrating multiple sensors and accelerates the speed of jointly calibrating.

It should be understood to those skilled in the art that aspects of the present disclosure can be realized as systems, methods or program products. Therefore, the various aspects of the present disclosure can be concretely realized in the following forms: full hardware embodiments, full software embodiments (including firmware, microcode, etc.), or embodiments combining hardwares and softwares, which may here be collectively referred to as "circuits", "modules", or "platforms".

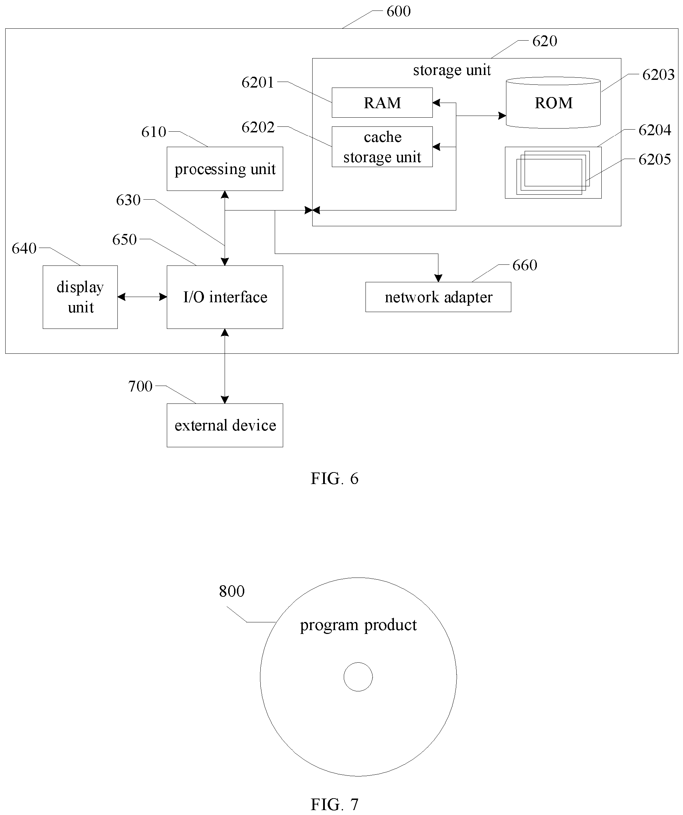

FIG. 6 is a structural diagram of a device for jointly calibrating multiple radars and camera of an embodiment of the present disclosure. An electronic device 600 according to this embodiment of the present disclosure will be described below with reference to FIG. 6. The electronic device 600 shown in FIG. 6 is only an example and should not impose any limitations on the functionality and scope of embodiments of the present disclosure.

As shown in FIG. 6, the electronic device 600 is represented as a general-purpose computing device. Components of the electronic device 600 may include, but are not limited to, at least one processing unit 610, at least one storage unit 620, a bus 630 connecting different platform components (including the storage unit 620 and the processing unit 610), a display unit 640, and so on.

Wherein, the storage unit 620 stores program code, which can be executed by the processing unit 610 to enable the processing unit 610 to perform the steps of the method for jointly calibrating multiple radars and camera described in the above embodiments of the present disclosure. For example, the processing unit 610 can perform the steps shown in FIG. 1.

The storage unit 620 may include readable medium in the form of volatile storage units, such as a random access storage unit (RAM) 6201 and/or a cache storage unit 6202, and may further include a read-only storage unit (ROM) 6203.

The storage unit 620 may also include programs/utilities 6204 having a set (at least one) of program modules 6205, the program modules 6205 includes, but not limited to, an operating system, one or more application programs, other program modules and program data, each or some combination of which may include implementation of a network environment.

The bus 630 may be one or more of several classes of bus structures, including a memory unit bus or a memory unit controller, a peripheral bus, a graphics acceleration port, a processing unit, or a local bus using any of several bus structures.

The electronic device 600 may also communicate with one or more external devices 700 (such as keyboards, pointing devices, Bluetooth devices, etc.), and with one or more devices that enable the user to interact with the electronic device 600, and/or with any device (e.g. a router, a modem, etc.) that enables the electronic device 600 to communicate with one or more other computing devices. This communication can be achieved through an input/output (I/O) interface 650. In addition, the electronic device 600 can also communicate with one or more networks (e.g. a local area network (LAN), a wide area network (WAN) and/or a public network (e.g. Internet) via a network adapter 660. The network adapter 660 can communicate with other modules of the electronic device 600 through the bus 630. It should be understood that, although not shown in FIG. 6, other hardware and/or software modules may be used in conjunction with the electronic device 600, including but not limited to: microcode, device drives, redundant processing units, external disk drive arrays, RAID systems, tape drives, and data backup storage platforms.

Embodiments of the present disclosure further provide a computer-readable storage medium for storing programs, wherein when the programs are executed, the steps of the method for jointly calibrating multiple radars and camera are implemented. In some possible embodiments, aspects of the present disclosure may also be realized in the form of a program product including program code that, when the program product is run on a terminal device, the steps of the method for jointly calibrating multiple radars and camera described in the above embodiments of the present disclosure are implemented by the terminal device.

When the programs stored in the computer-readable storage medium are executed, the world coordinates of the reference points on the same calibration plate can be obtained at the same time through the three different sensors, and the joint calibration can be achieved through iterating and matching, which reduces the steps of calibrating multiple sensors and accelerates the speed of jointly calibrating.

FIG. 7 is a structural diagram of the computer-readable storage medium in an embodiment of the present disclosure. As shown in FIG.7, a program product 800 for implementing the method according to the embodiments of the present disclosure may adopt a portable compact disk read-only memory (CD-ROM) and include program code and may be run on a terminal device, such as a personal computer. However, the program product of the present disclosure is not limited to this, and the readable storage medium may be any tangible medium containing or storing programs that may be used by instruction execution systems, equipments or devices.

The program product may adopt one readable medium or any combination of more readable medium. The readable medium may be, but is not limited to, systems, equipments or devices of electrical, magnetic, optical, electromagnetic, infrared, or semiconductor, or any combination of the above. More specific examples of the readable storage medium include (a non-exhaustive list): electrical connection having one or more wires, portable disks, hard disks, random access memories (RAM), read-only memories (ROM), erasable programmable read-only memories (EPROM or flash memory), optical fibers, portable compact disk read-only memories (CD-ROM), optical memory devices, magnetic memory devices, or any suitable combination of the above.

The computer-readable storage medium may include data signals propagated in baseband or as a carrier that carries readable program codes. Such data signals may take many forms, including but not limited to electromagnetic signals, optical signals, or any suitable combination of the above. The readable storage medium may also be any readable medium other than a readable storage medium which may transmit, propagate or transmit programs intended for use by or in combination with instruction executing systems, equipments or devices. The program codes contained in the readable storage medium may be transmitted in any appropriate medium, including but not limited to wireless, wired, fiber optic, RF, etc., or any suitable combination of the above.

Program codes for performing the operations of the present disclosure can be written in one programming language or any combination of more programming languages, including object-oriented programming languages such as Java, C++, etc., as well as conventional procedural programming languages such as the "C" language or similar programming languages. The program codes may be executed entirely on user computing devices, partly on the user computing devices, as a standalone package, partly on the user computing devices and partly on remote computing devices, or entirely on the remote computing devices or servers. In the case of remote computing devices, the remote computing devices may be connected to the user computing devices over any kind of network, including a local area network (LAN) or a wide area network (WAN), or it may be connected (for example, connected over Internet through an Internet service provider) to external computing devices.

In conclusion, the method, the system, the device and the storage medium for jointly calibrating multiple radars and camera of the present disclosure can obtain the world coordinates of the reference points on the same calibration plate through the three different sensors at the same time, and then achieves joint calibration through iterating and matching, which reduces the steps of calibrating multiple sensors and accelerates the speed of jointly calibrating.

The above contents are further detailed descriptions of the present disclosure in combination with specific preferred embodiments, and it cannot be assumed that the specific implementation of the present disclosure is limited to these descriptions. For ordinary technicians in the art to which the present disclosure belongs, a number of simple inferences or substitutions can be made without deviating from the concept of the present disclosure, which shall be regarded as belonging to the protection scope of the present disclosure.

**Claims**

1. A method for jointly calibrating multiple radars and camera, comprising steps of:

   S100, configuring multiple radar sensors and a camera sensor to jointly form a public field of view;
   S200, arranging a calibration plate successively at a plurality of target positions in the public field of view, obtaining detection data from the radar sensors and the camera sensor for the calibration plate at different target positions, and obtaining coordinate information of centers of a plurality of calibration patterns respectively in three-dimensional coordinate systems of the radar sensors and the camera sensor;
   wherein, the calibration patterns are provided on the calibration plate, and each of the calibration patterns is composed of materials with different reflection coefficients arrayed around the center of the calibration pattern;
   S300, jointly calibrating according to the coordinate information.

2. The method according to claim 1, wherein in the step S100, configure a millimeter wave radar sensor, a laser radar sensor and the camera sensor to jointly form the public field of view;

   in the step S200, arrange the same calibration plate successively at W target positions in the public field of view, collect positioning information detected by the millimeter wave radar sensor, the laser radar sensor and the camera sensor when the calibration plate is respectively located at each of the target positions, and the millimeter wave radar sensor, the laser radar sensor and the camera sensor synchronously detect the calibration plate located at each target position to respectively obtain center positioning information about central symmetric pattern reflecting areas;

   wherein, the calibration plate comprises a reflecting plate, p central symmetric pattern reflecting areas embedded in the reflecting plate at a same layer, and reflectors concentrically arranged in centers of the central symmetric pattern reflecting areas and convex on a surface of the reflecting plate, wherein reflectivity of the reflecting plate, reflectivity of the central symmetric pattern reflecting areas and reflectivity of the reflectors are diverse from each other;

   in the step S300, jointly calibrate according to the center positioning information of the millimeter wave radar sensor, the laser radar sensor and the camera sensor under different target positions.

3. The method according to claim 2, wherein the step S100 comprises: rigidly connecting the millimeter wave radar sensor, the laser radar sensor and the camera sensor, making detection directions of the millimeter wave radar sensor, the laser radar sensor and the camera sensor jointly converge to the public field of view.

4. The method according to claim 2, wherein the step S200 comprises: making the calibration plate at the target position completely appear in an image of the camera sensor and in detection ranges of the millimeter wave radar sensor and the laser radar sensor.

5. The method according to claim 2, wherein in the step S200, the camera sensor obtaining the center positioning information of the central symmetric pattern reflecting areas comprises steps of:

   S211, the camera sensor taking images of the reflecting plate;
   S212, performing image recognition on the images to obtain a first pattern trajectory of the central symmetric pattern reflecting areas;
   5213, obtaining centers of the central symmetric pattern reflecting areas according to the first pattern trajectory;
   S214, obtaining three-dimensional coordinates of the centers in the three-dimensional coordinate system of the camera sensor based on the three-dimensional coordinate system of the camera sensor.

6. The method according to claim 5, wherein the reflecting plate is rectangular, and the step S211 comprises rectangularity correcting on the images.

7. The method according to claim 2, wherein in the step S200, the laser radar sensor obtaining the center positioning information of the central symmetric pattern reflecting areas comprises steps of:

   S221, the laser radar sensor scanning the reflecting plate;
   S222, obtaining a second pattern trajectory that distinguishes the reflecting plate from the central symmetric pattern reflecting areas, according to reflectivity difference between the reflecting plate and the central symmetric pattern reflecting areas detected by the laser radar sensor;
   S223, obtaining centers of the central symmetric pattern reflecting areas according to the second pattern trajectory;
   S224, obtaining three-dimensional coordinates of the centers in the three-dimensional coordinate system of the laser radar sensor based on the three-dimensional coordinate system of the laser radar sensor.

8. The method according to claim 2, wherein in the step S200, the millimeter wave radar sensor obtaining the center positioning information of the central symmetric pattern reflecting areas comprises steps of:

   S231, the millimeter wave radar sensor scanning shapes of the reflectors on the calibration plate;
   S232, obtaining three-dimensional coordinates of the reflectors in the three-dimensional coordinate system of the millimeter wave radar sensor based on the three-dimensional coordinate system of the millimeter wave radar sensor;
   S233, obtaining three-dimensional coordinates of the centers in the three-dimensional coordinate system of the millimeter wave radar sensor, according to a preset position relation between the reflectors and the centers of the central symmetric pattern reflecting areas.

9. The method according to claim 2, wherein the step S300 comprises steps of:

   setting "$y = \{y_1, \ldots y_W\}$" as target features of each sensor, "$u_k^i$" as the target positions of the calibration plate, "k" as a position number of the calibration plate, and "c", "l" and "r" respectively as the camera sensor, the laser radar sensor and the millimeter wave radar sensor;

obtaining a 4 × 4 conversion matrix "

$$T^{c,l} = \begin{bmatrix} R_1 & t_1 \\ \hline 0 & 1 \end{bmatrix}$$

" from the camera sensor to the laser radar sensor, wherein "$R_1$" and "$t_1$" are respectively a 3 × 3 rotation matrix and a 3 × 1 translation matrix from the camera sensor to the laser radar sensor;

for the calibration plate at a position "k", using Euclidean distance between corresponding centers of circles to represent an error of the conversion matrix between the camera sensor and the laser radar sensor:

$$e_k^{c,l} = \sum_{p=1}^{4} \| y_{k,p}^c - T^{c,l} \cdot y_{k,p}^l \|^2 \qquad (1),$$

wherein, "$e_k^{c,l}$" represents a matching error of extrinsic parameters between the camera sensor and the laser radar sensor under the position "k", "$y_{k,p}^c$" represents three-dimensional coordinates of a center of a circle "p" in the coordinate system of the camera sensor when the calibration plate is at the position "k", "$y_{k,p}^l$" represents three-dimensional coordinates of the center of the circle "p" conversed to the coordinate system of the camera sensor from the laser radar sensor when the calibration plate is at the position "k", "$T^{c,l}$" represents the rotation and translation matrix from the camera sensor to the laser radar sensor, and "p" represents a number of circles in the calibration plate;

obtaining a 4 × 4 conversion matrix "

$$T^{r,l} = \begin{bmatrix} R_2 & t_2 \\ \hline 0 & 1 \end{bmatrix}$$

" from the millimeter wave radar sensor to the laser radar sensor, wherein "$R_2$" and "$t_2$" are respectively a 3 × 3 rotation matrix and a 3 × 1 translation matrix from the millimeter wave radar sensor to the laser radar sensor;

for the calibration plate at the position "k", representing an error between the millimeter wave radar sensor and the laser radar sensor as following equation:

$$e_k^{r,l} = \sum_{p=1}^{4} \| y_{k,p}^r - T^{r,l} \cdot y_{k,p}^l \|^2 \qquad (2),$$

wherein, "$e_k^{r,l}$" represents a matching error of extrinsic parameters between the millimeter wave radar sensor and the laser radar sensor under the position "k", " $y^{r}_{k,p}$ " represents three-dimensional coordinates of the center of the circle "p" in the coordinate system of the millimeter wave radar sensor when the calibration plate is at the position "k", " $y^{l}_{k,p}$ " represents the three-dimensional coordinates of the center of the circle "p" conversed to the coordinate system of the camera sensor from the laser radar sensor when the calibration plate is at the position "k", "$T^{r,l}$" represents the rotation and translation matrix from the millimeter wave radar sensor to the laser radar sensor, and "p" represents the number of the circles in the calibration plate; converting Euclidean space representation to a spherical coordinate system, represented by a coordinate " $(r_k, \varphi_k, \psi_k)$" as:

$$ e^{r,l}_{k} = \sum_{p=1}^{4} \| y^{r}_{(r_k, \varphi_k, \psi_k)} - T^{r,l} \cdot y^{l}_{(r_k, \varphi_k, \psi_k)} \|^2 \quad (3), $$

wherein, " $y^{r}_{(r_k, \varphi_k, \psi_k)}$ " represents spherical coordinates of a center of the calibration plate in the coordinate system of the millimeter wave radar sensor when the calibration plate is at the position "k", " $\psi_k$" represents an unknown pitch angle and its initial value is 0, and " $y^{r}_{(r_k, \varphi_k, \psi_k)}$ " represents spherical coordinates of the center of the calibration plate in the coordinate system of the laser radar sensor; defining a maximum " $\psi_{max}$" based on a vertical field angle of the millimeter wave radar sensor and obtaining:

$$ |\psi_k| - \psi_{max} \leq 0, \quad \forall k \quad (4); $$

for the calibration plate at a position "W", using " $f(\theta^{c,l})$" to represent a total error between the camera sensor and the laser radar sensor:

$$ f(\theta^{c,l}) = \sum_{k=1}^{W} \mu^{l}_{k} \cdot \mu^{c}_{k} \cdot e_{k}(\theta^{c,l}) \quad (5), $$

and using "$f(\theta^{r,l})$" to represent a total error between the millimeter wave radar sensor and the laser radar sensor:

$$ f(\theta^{r,l}) = \sum_{k=1}^{W} \mu^{l}_{k} \cdot \mu^{r}_{k} \cdot e_{k}(\theta^{r,l}) \quad (6), $$

wherein, " $\mu^{l}_{k} \cdot \mu^{c}_{k}$ " represents whether a parameter between the camera sensor and the laser radar sensor exists, if the parameter exists, " $\mu^{l}_{k} \cdot \mu^{c}_{k}$ " is 1, and if the parameter does not exist, " $\mu^{l}_{k} \cdot \mu^{c}_{k}$ " is 0; " $\mu^{l}_{k} \cdot \mu^{r}_{k}$ " represents whether a parameter between the millimeter wave radar sensor and the laser radar sensor exists, if the parameter exists, " $\mu^{l}_{k} \cdot \mu^{r}_{k}$ " is 1, and if the parameter does not exist, " $\mu^{l}_{k} \cdot \mu^{r}_{k}$ " is 0; iterating and optimizing the "$f(\theta^{c,l})$" and the "$f(\theta^{r,l})$" with a least square method, obtaining the conversion matrix form the camera sensor to the laser radar sensor when the "$f(\theta^{c,l})$" is minimum, and obtaining the conversion matrix from the millimeter wave radar sensor to the laser radar sensor when the "$f(\theta^{r,l})$" is minimum.

10. A system for jointly calibrating multiple radars and camera, wherein the system is used to achieve the method according to claim 1 and comprises:

a public field of view module, used to configure multiple radar sensors and a camera sensor to jointly form a public field of view; a coordinate detection module, used to arrange a calibration plate successively at a plurality of target positions in the public field of view, obtain detection data from the radar sensors and the camera sensor for the calibration plate at different target positions, and obtain coordinate information of centers of a plurality of calibration patterns respectively in three-dimensional coordinate systems of the radar sensors and the camera sensor; wherein, the calibration patterns are provided on the calibration plate, and each of the calibration patterns is composed of materials with different reflection coefficients arrayed around the center of the calibration pattern; a joint calibration module, used to jointly calibrate according to the coordinate information.

11. A device for jointly calibrating multiple radars and camera, comprising:

a processor; a memory storing executable instructions executed by the processor;

wherein, the processor is configured to execute the steps of the method for jointly calibrating multiple radars and camera according to any one of claims 1 to 9, by executing the executable instructions.

12. A computer-readable storage medium for storing programs, wherein when the programs are executed, the steps of the method for jointly calibrating multiple radars and camera according to any one of claims 1 to 9 are implemented.

| | S100 |
|---|---|
| PROVIDE MULTIPLE RADAR SENSORS AND AN IMAGE SENSOR, SO AS TO FORM A COMMON FIELD-OF-VIEW AREA TOGETHER | |

| | S200 |
|---|---|
| SUCCESSIVELY ARRANGE A CALIBRATION PLATE AT A PLURALITY OF TARGET POSITIONS IN THE COMMON FIELD-OF-VIEW AREA, WHEREIN A PLURALITY OF CALIBRATION PATTERNS ARE PROVIDED ON THE CALIBRATION PLATE, AND FOR THE CALIBRATION PATTERNS, MATERIALS HAVING DIFFERENT REFLECTION COEFFICIENTS ARE ARRANGED AROUND THE CENTERS OF THE CALIBRATION PATTERNS, AND OBTAIN DATA OF DETECTION OF THE CALIBRATION PLATE AT DIFFERENT TARGET POSITIONS BY THE RADAR SENSORS AND THE IMAGE SENSOR, SO AS TO OBTAIN COORDINATE INFORMATION OF THE CENTERS OF THE CALIBRATION PATTERNS IN RESPEGTIVE THREE-DIMENSIONAL COORDINATE SYSTEMS OF EACH RADAR SENSOR AND THE IMAGE SENSOR | |

| | S300 |
|---|---|
| PERFORM JOINT CALIBRATION ACCORDING TO THE COORDINATE INFORMATION | |

FIG. 1

FIG. 2

FIG. 3

31

33

32

3

FIG. 4

system for jointly calibrating
multiple radars and camera

5

public field of view module

51

coordinate detection module

52

joint calibration module

53

FIG. 5

FIG. 6

FIG. 7

## INTERNATIONAL SEARCH REPORT

| International application No. |
| --- |
| **PCT/CN2021/108586** |

**A. CLASSIFICATION OF SUBJECT MATTER**

G01S 7/40(2006.01)i; G01S 7/497(2006.01)i; G01M 11/02(2006.01)i; G06T 7/80(2017.01)i; G06F 17/16(2006.01)i

According to International Patent Classification (IPC) or to both national classification and IPC

**B. FIELDS SEARCHED**

Minimum documentation searched (classification system followed by classification symbols)

G01S7/-, G01M11/-, G06T7/-, G06F17/-

Documentation searched other than minimum documentation to the extent that such documents are included in the fields searched

Electronic data base consulted during the international search (name of data base and, where practicable, search terms used)

CNABS; VEN; CNTXT: 不同, 反射系数, 反射率, 标定板, 标定; joint??, combin+, calibrat+, laser, millimeter wave, radar, camera, target, calibration plate, reflectivity

**C. DOCUMENTS CONSIDERED TO BE RELEVANT**

| Category* | Citation of document, with indication, where appropriate, of the relevant passages | Relevant to claim No. |
| --- | --- | --- |
| Y | CN 111427020 A (RESEARCH INSTITUTE OF HIGHWAY MINISTRY OF TRANSPORT) 17 July 2020 (2020-07-17) description, paragraphs 20-51, and figures 1-3 | 1-8, 10-12 |
| Y | CN 211087307 U (SICHUAN SHENRUISHI TECHNOLOGY CO., LTD.) 24 July 2020 (2020-07-24) description, paragraphs 24-56, and figures 1-6 | 1-8, 10-12 |
| A | CN 110390695 A (SOUTHEAST UNIVERSITY) 29 October 2019 (2019-10-29) entire document | 1-12 |
| A | JP 2006011570 A (DAIHATSU MOTOR CO., LTD.) 12 January 2006 (2006-01-12) entire document | 1-12 |
| A | KR 20180133745 A (AGENCY FOR DEFENSE DEVELOPMENT) 17 December 2018 (2018-12-17) entire document | 1-12 |
| A | CN 112241007 A (BEIJING NEW ENERGY VEHICLE TECHNOLOGY INNOVATION CENTER CO., LTD.) 19 January 2021 (2021-01-19) entire document | 1-12 |

☑ Further documents are listed in the continuation of Box C.  ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 October 2021** | **22 October 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2021/108586**

### C. DOCUMENTS CONSIDERED TO BE RELEVANT

| Category* | Citation of document, with indication, where appropriate, of the relevant passages | Relevant to claim No. |
|---|---|---|
| A | CN 108399643 A (NANJING UNIVERSITY) 14 August 2018 (2018-08-14) <br> entire document | 1-12 |
| A | CN 111413983 A (JIANGSU SHENGHAI INTELLIGENT TECHNOLOGY CO., LTD.) 14 July 2020 (2020-07-14) <br> entire document | 1-12 |
| A | CN 107609522 A (DONGHUA UNIVERSITY) 19 January 2018 (2018-01-19) <br> entire document | 1-12 |
| PX | CN 112859022 A (SHANGHAI WESTWELL INFORMATION TECHNOLOGY CO., LTD.) 28 May 2021 (2021-05-28) <br> entire document | 1-12 |

Form PCT/ISA/210 (second sheet) (January 2015)

## INTERNATIONAL SEARCH REPORT
### Information on patent family members

International application No.

**PCT/CN2021/108586**

| Patent document cited in search report | | | Publication date (day/month/year) | Patent family member(s) | | | Publication date (day/month/year) |
|---|---|---|---|---|---|---|---|
| CN | 111427020 | A | 17 July 2020 | None | | | |
| CN | 211087307 | U | 24 July 2020 | None | | | |
| CN | 110390695 | A | 29 October 2019 | None | | | |
| JP | 2006011570 | A | 12 January 2006 | None | | | |
| KR | 20180133745 | A | 17 December 2018 | KR | 101948569 | B1 | 15 February 2019 |
| CN | 112241007 | A | 19 January 2021 | None | | | |
| CN | 108399643 | A | 14 August 2018 | None | | | |
| CN | 111413983 | A | 14 July 2020 | None | | | |
| CN | 107609522 | A | 19 January 2018 | CN | 107609522 | B | 13 April 2021 |
| CN | 112859022 | A | 28 May 2021 | None | | | |

Form PCT/ISA/210 (patent family annex) (January 2015)